# EUROPÄISCHE PATENTSCHRIFT

(11) **EP 0 358 017 B1**
(45) Veröffentlichungstag und Bekanntmachung des Hinweises auf die Patenterteilung: **21.12.1994**
(21) Anmeldenummer: 89115311.6
(22) Anmeldetag: 19.08.1989
(51) Int. Cl.: C08G 65/40

(54) **Polyaryletherketone**
Polyaryl ether ketones
Polyaryl éther cétones

(30) Priorität: 30.08.1988 DE 3829283
(43) Veröffentlichungstag der Anmeldung: 14.03.1990
(73) Patentinhaber: BASF Aktiengesellschaft, 67063 Ludwigshafen (DE)
(72) Erfinder: Heinz, Gerhard, Dr., D-6719 Weisenheim (DE); Lieder, Robert Ralf, Dr., D-6703 Limburgerhof (DE)

(56) Entgegenhaltungen:
- EP-A- 0 265 842
- DE-A- 3 602 090
- DE-B- 1 545 106

## Beschreibung

Die Erfindung betrifft ein Verfahren zur Herstellung von Polyaryletherketonen durch nucleophile Polykondensation eines Bisphenols mit einem Gemisch aus einer dichloraromatischen Verbindung und einer difluoraromatischen Verbindung.

Die nucleophile Polykondensation von Bisphenolen mit Dihalogenaromaten zur Herstellung von Polyaryletherketonen ist seit langem bekannt, z.B. aus DE-B-1 545 106 und EP-B-1 879. Es ist ferner bekannt, daß hochmolekulare Polyaryletherketone nur dann erhalten werden, wenn man als Dihalogenaromaten die verhältnismäßig teuren Difluorverbindungen einsetzt. In EP-B-1 879, Seite 5 oben, wird zwar erwähnt, daß man aus Kostengründen einen Teil der Difluorverbindung durch die Dichlorverbindung ersetzen kann. Es hat sich aber gezeigt, daß die dabei erhaltenen Polymeren ein für viele Anwendungszwecke zu niedriges Molekulargewicht aufweisen. Für die Herstellung von Folien, Fasern und Formkörper muß die reduzierte Viskosität η (gemessen in 0,5 %iger Lösung in konzentrierter Schwefelsäure bei 25°C) des Polyaryletherketons mindestens 0,70 und insbesondere 0,75 sein.

Der Erfindung lag nun die Aufgabe zugrunde, ein Verfahren zur Herstellung von hochmolekularen Polyaryletherketonen zu entwickeln, bei dem ein Teil der teuren Difluorverbindungen durch die billigeren Dichlorverbindungen ersetzt ist.

Es wurde nun gefunden, daß diese Aufgabe gelöst wird, wenn in einem zweistufigen Prozeß in der ersten Stufe die Gesamtmenge des Bisphenols und der Dichlorverbindung umgesetzt wird und in der zweiten Stufe erst die Difluorverbindung zugegeben wird.

Gegenstand der Erfindung ist demgemäß ein Verfahren zur Herstellung von hochmolekularen Polyaryletherketonen durch Polykondensation eines Bispnenols (A) mit einer dihalogenaromatischen Verbindung (B) im molaren Verhältnis (A):(B) zwischen 0,9:1 und 1,1:1 bei Temperaturen zwischen 200 und 400°C in einem polaren, aprotischen Lösungsmittel in Gegenwart eines Alkalimetallcarbonats, wobei als Dihalogenaromat (B) ein Gemisch aus
- B1: 1 bis 30 Gew.% einer Dichlorverbindung und
- B2: 99 bis 70 Gew.% einer Difluorverbindung eingesetzt wird,
dadurch gekennzeichnet, daß
1. in einer ersten Stufe praktisch die Gesamtmenge an Dichlorverbindung (B1), sowie gegebenenfalls maximal die Hälfte der Difluorverbindung (B2) umgesetzt werden und
2. in einer zweiten Stufe der Rest der Difluorverbindung (B2) zugegeben wird.

Die Polyaryletherketone sind vorzugsweise solche der allgemeinen Formel 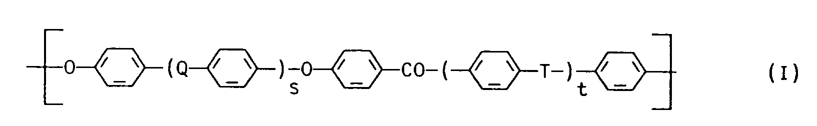
wobei s und t jeweils den Wert 0, 1, 2 oder 3 haben und Q und T jeweils -O- oder -CO- sein können.

Die bei dem erfindungsgemäßen Verfahren erhaltenen Polyaryletherketone der Formel I weisen eine reduzierte Viskosität von mindestens 0,65 auf, sie enthalten zwischen 0,003 und 0,3, vorzugsweise zwischen 0,005 und 0,02 Gew.% organisch gebundenes Chlor und zwischen 0,003 und 0,03, vorzugsweise zwischen 0,005 und 0,02 Gew.% organisch gebundenes Fluor.

Die Gehalte an organisch gebundenem Chlor und Fluor werden folgendermaßen bestimmt:
Der Gesamtfluor- bzw. -chlorgehalt ergibt sich durch Wickbold-Verbrennung in der Knallgasflamme und anschließende Bestimmung von Fluor über ionensensitive Endbestimmung bzw. Chlor über Ionenchromatographie.

Der Gehalt an ionisch gebundenem Fluor bzw. Chlor wird bestimmt in einem wäßrigen Auszug, und zwar Fluor über die ionensensitive Endbestimmung und Chlor potentiometrisch mit Silbernitrat. Der Anteil an organisch gebundenem Fluor bzw. Chlor ergibt sich dann aus der Differenz zwischen dem Gesamtfluor- bzw. -chlorgehalt und dem ionisch gebundenen Fluor bzw. Chlor.

Geeignete Bisphenole (A) sind z.B.: 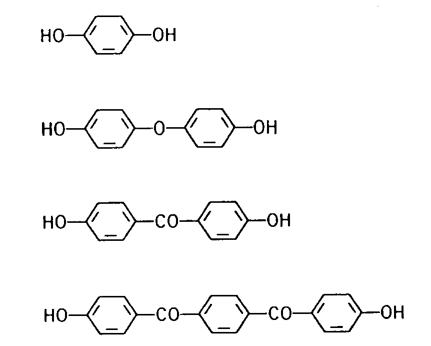
Geeignete Dihalogenaromaten B sind z.B.: 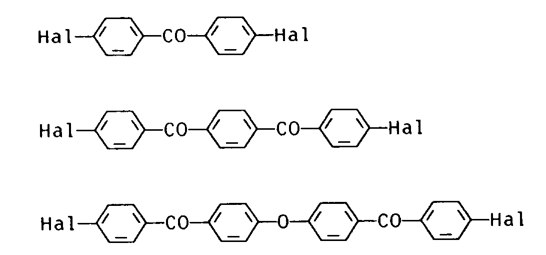
Die vorstehend angegebenen Monomeren stellen nur eine Auswahl aus den bei der nucleophilen Herstellung verwendbaren Monomeren dar. Gegebenenfalls können auch weitere Monomere, die Diphenylen-, Naphthylen-, -S-, -SO₂- oder Imidbrückenglieder enthalten, in Mengen bis zu 20 Mol.% mitverwendet werden.

Das Molekulargewicht (Gewichtsmittelwert) der erfindungsgemäßen Polyaryletherketone liegt im allgemeinen im Bereich von 10.000 bis 150.000, vorzugsweise von 15.000 bis 100.000 und insbesondere von 18.000 bis 80.000.

Als Dihalogenaromaten (B) werden erfindungsgemäß Gemische von
- B1: 1 bis 30 Gew.% einer Dichlorverbindung und
- B2: 99 bis 70 Gew.% einer Difluorverbindung
eingesetzt. Vorzugsweise enthält das Gemisch 2 bis 20 und insbesondere 5 bis 15 Gew.% der Dichlorverbindung.

In der ersten Stufe wird nun praktisch die Gesamtmenge an Bisphenol (A) und an Dichlorverbindung, sowie gegebenenfalls maximal die Hälfte, vorzugsweise weniger als ein Viertel der Difluorverbindung umgesetzt. Praktisch bedeutet dabei, daß maximal 2 %, vorzugsweise weniger als 1 % der entsprechenden Dichlor-Verbindungen auch erst in der 2. Stufe zugesetzt werden können.

Die erfindungsgemäße nucleophile Polykondensation ist ausführlich in EP-B-1 879 beschrieben. Sie wird in einem polaren, aprotischen Lösungsmittel, vorzugsweise in einem Sulfongruppen enthaltenden Lösungsmittel durchgeführt. Besonders bevorzugt ist Diphenylsulfon. Die Menge an Diphenylsulfon beträgt im allgemeinen 5 bis 100 mol, vorzugsweise 5 bis 20 mol, bezogen auf 1 mol Monomere. Dies ergibt einen bevorzugten Feststoffgehalt der Reaktionslösung im Bereich von 5 bis 50, besonders bevorzugt 10 bis 40 Gew.%.

Die Polykondensation wird in Gegenwart eines Alkalimetallcarbonats durchgeführt. Bevorzugt sind Kaliumcarbonat und Mischungen von Kalium- und Natriumcarbonat. Dabei sollten mindestens 2 Mol Alkalimetallcarbonat auf 1 Mol Bisphenol eingesetzt werden.

Es hat sich gezeigt, daß insbesondere dann hochmolekulare Polyetherketone entstehen, wenn die Temperatur bei der Polykonensation in der ersten Stufe maximal 300°C beträgt, vorzugsweise maximal 275°C und insbesondere maximal 250°C. Die optimalen Temperaturen für die erste Stufe sind 230 bis 240°C, für die zweite Stufe 300 bis 320°C.

Die Umsetzung in der 1. Stufe sollte zweckmäßigerweise mindestens 0,5 Stunden, vorzugsweise mindestens 1 Stunde betragen. Die optimalen Reaktionszeiten liegen bei 1 bis 2 Stunden in der ersten und 1 bis 3 Stunden in der 2. Stufe.

Das bei der Polykondensation entstehende Wasser kann mit Hilfe eines Azeotropbildners, Anlegen eines Unterdrucks oder vorzugsweise durch Einleiten eines Stickstoffstroms und Abdestillieren entfernt werden. Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Im Anschluß an die Polykondensation können zur Stabilisierung freie Phenolat-Endgruppen mit einem Arylierungs- oder Alkylierungsmittel wie Methylenchlorid (oder 4-Fluorbenzophenon) umgesetzt werden. Dies erfolgt vorzugsweise bei Temperaturen von bis zu 350°C, wobei die untere Temperaturgrenze durch die Löslichkeit des Polyaryletherketons im eingesetzten Lösungsmittel bestimmt wird.

Die Aufarbeitung der Reaktionsprodukte kann nach üblichen, an sich bekannten Verfahren erfolgen. Vorteilhaft wird aus der Schmelze ein feinteiliges Gut erzeugt, welches durch Extraktion mit einem geeigneten Lösungsmittel (z.B. Aceton) von Reaktionslösungsmittel (z.B. Diphenylsulfon) befreit wird. Anschließend können Reste von Alkalimetallcarbonaten und -fluoriden durch Extraktion mit Wasser entfernt werden.

Die nach dem erfindinngsgemäßen Verfahren hergestellten Polyaryletherketone können mit anderen Polyaryletherketonen oder mit Polyarylethersulfonen gemischt werden.

Darüber hinaus können auch Füllstoffe, Pigmente und übliche Verarbeitungshilfsmittel zugegeben werden. Als verstärkend wirkende Füllstoffe seien beispielsweise Kohlenstoffasern und vorzugsweise Glasfasern genannt, wobei die Glasfasern z.B. in Form von Glasgeweben, Glasmatten, Glasvliesen und vorzugsweise Glasseidenrovings oder geschnittener Glasseide zur Anwendung kommen.

Die nach dem erfindungsgemäßen Verfahren hergestellten Polyaryletherketone zeichnen sich durch eine hohe Wärmebeständigkeit und gute Verarbeitbarkeit bei ausreichend hoher Zähigkeit und Festigkeit aus. Aufgrund dieser Eigenschaften können sie vorteilhaft zu Folien, Fasern und Spritzgußteilen, insbesondere zu elektrischen und elektronischen Bauteilen verarbeitet werden.

Die in den Beispielen genannten Teile und Prozente beziehen sich auf das Gewicht.

### Beispiel 1

Zu 600 g Diphenylsulfon wurden bei 200°C 19,075 g 1,4-Bis(p-chlorbenzoyl)-benzol (BCBB), 19,93 g Hydrochinon und 27,4 g Kaliumcarbonat gegeben. Nach 1,5 Stunden Rühren unter Stickstoff bei 230°C Innentemperatur wurde die Temperatur auf 200°C gebracht und es wurden 40,531 g 1,4-Bis-(pfluorbenzoyl)benzol (BFBB) und 0,072 g 4-Fluorbenzophenon zugegeben. Am Ende des sich nun anschließenden Temperaturprogramms (1 h 200°C, 1 h 240°C, 1 h 300°C, 1 h 320°C) wurde durch Extraktion mit Aceton und Wasser aufgearbeitet.

### Beispiel 2

Wie Beispiel 1, aber mit 6,359 g BCBB und 52,11 g BFBB.

### Beispiel 3

Wie Beispiel 1, aber mit 3,18 g BCBB und 55,01 g BFBB.

### Beispiel 4 (Vergleich)

Wie Beispiel 1, aber mit 63,58 g BCBB als alleiniger Dihalogenkomponente.

### Beispiel 5 (Vergleich)

Wie Beispiel 1, wobei aber alle Komponenten gleichzeitig zugesetzt wurden.

### Beispiel 6 (Vergleich)

Wie Beispiel 2, wobei aber alle Komponenten gleichzeitig zugesetzt wurden.

### Ergebnisse:

| Beispiel | Mol BFBB | Mol BCBB | Mol Hydroch. | % org. Fluor | % org. Chlor | ηred |
|---|---|---|---|---|---|---|
| 1 | 0,7 | 0,3 | 1 | 0,01 | 0,029 | 0,68 |
| 2 | 0,9 | 0,1 | 1 | 0,01 | 0,01 | 0,72 |
| 3 | 0,95 | 0,05 | 1 | <0,01 | 0,007 | 0,83 |
| 4 | 0 | 1 | 1 | - | 0,12 | 0,32 |
| 5 | 0,7 | 0,3 | 1 | <0,05 | 0,08 | 0,4 |
| 6 | 0,9 | 0,1 | 1 | <0,05 | 0,04 | 0,52 |

## Patentansprüche

1. Verfahren zur Herstellung von hochmolekularen Polyaryletherketonen durch Polykondensation eines Bisphenols (A) mit einer dihalogenaromatischen Verbindung (B) im molaren Verhältnis (A):(B) zwischen 0,9:1 und 1,1:1 bei Temperaturen zwischen 200 und 400°C in einem polaren, aprotischen Lösungsmittel in Gegenwart eines Alkalimetallcarbonats, wobei als Dihalogenaromat (B) ein Gemisch aus
B1 1 bis 30 Gew.% einer Dichlorverbindung und
B2 99 bis 70 Gew.% einer Difluorverbindung eingesetzt wird,
dadurch gekennzeichnet, daß
1. in einer ersten Stufe die Gesamtmenge des Bisphenols (A) und die Gesamtmenge an Dichlorverbindung (B1), sowie gegebenenfalls maximal die Hälfte der Difluorverbindung (B2) umgesetzt werden und
2. in einer zweiten Stufe der Rest der Difluorverbindung B2 zugegeben wird mit der Maßgabe, daß maximal 2 % der Gesamtmenge an Dichlorverbindung (B1) auch erst in einer zweiten Stufe zugesetzt werden können.

2. Verfahren nach Anspruch 1, dadurch gekennzeichnet, daß die Umsetzung in der ersten Stufe mindestens 0,5 Stunden dauert.

3. Verfahren nach Anspruch 1, dadurch gekennzeichnet, daß die Temperatur in der 1. Stufe maximal 300°C beträgt.

## Claims

1. A process for the preparation of a high molecular weight polyaryletherketone by polycondensation of a bisphenol (A) with a dihaloaromatic compound (B) in a molar ratio (A) : (B) of from 0.9 : 1 to 1.1 : 1 at from 200 to 400°C in a polar, aprotic solvent in the presence of an alkali metal carbonate, a mixture of
B1 from 1 to 30% by weight of a dichloro compound and
B2 from 99 to 70% by weight of a difluoro compound being used as the dihaloaromatic (B), wherein
1. in a first stage, the total amount of the bisphenol (A) and the total amount of dichloro compound (B1) and, if required, not more than half the difluoro compound (B2) are reacted and
2. in a second stage, the remainder of the difluoro compound (B2) is added, with the proviso that no more than 2% of the total amount of dichloro compound (B1) can also be added in a second stage.

2. A process as claimed in claim 1, wherein the reaction in the first stage takes not less than 0.5 hour.

3. A process as claimed in claim 1, wherein the temperature in the first stage is not more than 300°C.

## Revendications

1. Procédé de préparation de polyaryléthercétones de masses moléculaires élevées par polycondensation d'un bisphénol (A) avec un composé aromatique dihalogéné (B) dans un rapport molaire (A): (B) compris entre 0,9:1 et 1,1:1, à des températures comprises entre 200 et 400°C, dans un solvant aprotique polaire, en présence d'un carbonate de métal alcalin, le composé aromatique dihalogéné (B) utilisé étant un mélange de
B1 1 à 30% en poids d'un composé dichloré et
B2 99 à 70% en poids d'un composé difluoré,
caractérisé en ce que
1. dans une première étape, la quantité totale du bisphénol (A) et la quantité totale du composé dichloré (B1), ainsi éventuellement que la moitié au maximum du composé difluoré (B2) sont mises en réaction et
2. dans une seconde étape, le reste du composé difluoré (B2) est ajouté, étant spécifié que 2% au maximum de la quantité totale du composé dichloré (B1) peuvent aussi n'être ajoutés que dans la seconde étape.

2. Procédé selon la revendication 1, caractérisé en ce que la réaction dans la première étape dure au moins 0,5 h.

3. Procédé selon la revendication 1, caractérisé en ce que la température dans la première étape s'élève au maximum à 300°C.
